# EUROPÄISCHE PATENTSCHRIFT

(11) **EP 2 088 295 B1**
(45) Veröffentlichungstag und Bekanntmachung des Hinweises auf die Patenterteilung: **28.12.2011**
(21) Anmeldenummer: 09151581.7
(22) Anmeldetag: 29.01.2009
(51) Int. Cl.: F01N 9/00, F01N 3/04, F02D 41/02

(54) **Verfahren zur Steuerung einer Kraftfahrzeug-Verbrennungsmotoranordnung**
Method for controlling a motor vehicle combustion engine assembly
Procédé de commande d'un agencement de moteur à combustion de véhicule automobile

(30) Priorität: 11.02.2008 DE 102008008495
(43) Veröffentlichungstag der Anmeldung: 12.08.2009
(73) Patentinhaber: Pierburg GmbH, 41460 Neuss (DE)
(72) Erfinder: Kühnel, Hans-Ulrich, 41239, Mönchengladbach (DE); Sanders, Michael, 41564, Kaarst (DE)
(74) Vertreter: Patentanwälte ter Smitten

(56) Entgegenhaltungen:
- WO-A2-2007/111926
- DE-A1- 10 347 834
- DE-A1-102005 056 677
- JP-A- 2003 201 829
- US-A- 3 839 535
- US-A1- 2007 012 034

## Beschreibung

Die Erfindung bezieht sich auf ein Verfahren zur Steuerung einer Regenerationsphase einer Kraftfahrzeug-Verbrennungsmotor-Anordnung mit einem Abgas-Partikelfilter.

Moderne Verbrennungsmotor-Anordnungen, und insbesondere Diesel-Verbrennungsmotor- Anordnungen, weisen häufig einen Abgas-Partikelfilter zur Reinigung des Abgases von Partikeln auf, die im wesentlichen Russ-Partikel sind. Eine gute Filterleistung bieten so genannte Wandstrom-Partikelfilter, in denen das mit Partikeln versetzte Abgas bei der Durchdringung einer porösen Filterwand gefiltert wird. Zwar ist die Porengröße der Filterwand erheblich größer als die Partikelgröße. Allerdings lagern sich im Laufe des Betriebes erhebliche Partikelmengen in der Filterwand an, die kontinuierlich oder regelmäßig entfernt werden müssen, um einen regelgerechten Betrieb des Partikelfilters bzw. der Verbrennungsmotor-Anordnung sicherzustellen. Die Regeneration des Partikelfilters erfolgt durch Verbrennung der eingelagerten Partikel bei erhöhter Temperatur. Eine Regeneration des Partikelfilters ist angezeigt, wenn der Partikelfilter durch die Partikel so zugesetzt ist, dass der Abgasstrom durch den Partikelfilter zu sehr behindert wird. Die Auslösung der Regeneration wird durch eine Regenerations-Auslösevorrichtung generiert, die beispielsweise mit Hilfe von Drucksensoren vor und hinter dem Partikelfilter den Differenzdruck über dem Partikelfilter erfasst. Übersteigt der Differenzdruck einen festgelegten Grenz-Differenzdruck, wird durch die Regenerations-Auslösevorrichtung eine Regeneration des Partikelfilters ausgelöst.

Bei Regenerations-Auslösevorrichtungen bzw. bei Regenerations-Verfahren nach dem Stand der Technik wird während der Regeneration die Temperatur des Abgases, das in den Partikelfilter eintritt, durch entsprechende Erhöhung der Stellgröße Abgastemperatur für eine bestimmte Zeit erhöht. Das in den Partikelfilter eintretende Abgas hat während der Regeneration also eine erhöhte Temperatur, wodurch auch der Partikelfilter eine höhere Temperatur annimmt und die eingelagerten Partikel schließlich abgebrannt werden.

Problematisch hierbei ist, dass eine ausreichend hohe Temperatur des in den Partikelfilter eintretenden Abgases bei Diesel- Verbrennungsmotoren wegen ihrer hohen Effizienz bei kurzzeitigem Betrieb, insbesondere bei kürzeren Stadtfahrten nicht, nur sehr langsam oder nur unter Inkaufnahme eines an sich vermeidbaren Kraftstoff- Mehrverbrauches erreicht wird.

Aus JP 2003/201829 ist ein Verfahren zur Steuerung einer Verbrennungsmotor-Anordnung bekannt, bei dem abhängig von der Temperatur des Partikelfilters der Kühler-Bypass in der Hochdruck-Abgasrückführung geöffnet wird.

Aus US 3,839,535 Ist eine Verbrennungsmotor-Anordnung bekannt, bei der hinter dem Abgaskrümmer ein Abgas-Kühler mit einem Bypass vorgesehen ist.

In WO 2007/111926 A2 ist eine Verbrennungsmotor-Anordnung mit einem Partikelfilter offenbart, bei der im Regenerations-Modus der Bypass des Ladeluftkühlers geöffnet wird, um die Ladeluft-Temperatur zu erhöhen

Aus US 2007/0012034 A1 ist eine Verbrennungsmotor-Anordnung beschrieben, bei der das Bypass-Ventil generell geöffnet wird, wenn die Regeneration des Partikelfilters stattfindet. Eine Temperaturregelung ist jedoch nicht beschrieben.

In DE 10 2005 056 677 A1 wird eine Verbrennungsmotor-Anordnung beschrieben, bei der die Temperatur des Partikelfilters während der Regeneration gesteuert bzw. geregelt wird.

Aus DE 103 47 834 A1 ist eine Verbrennungsmotor-Anordnung bekannt, bei der während der Partikelfilter-Regeneration das rückgeführte Abgas ungekühlt zurückgeführt wird.

Aufgabe der Erfindung ist es demgegenüber, ein Steuerungsverfahren zu schaffen, mit dem die Regeneration des Partikelfilters verbessert wird.

Diese Aufgabe wird, wenn eine Regeneration durch die Regenerations-Auslösevorrichtung ausgelöst ist, erfindungsgemäß mit folgenden Verfahrensschritten gelöst:
- Bestimmung der Abgastemperatur mit dem Abgastemperatur-Sensor,
- wenn die Abgastemperatur in der Regenerationsphase unter einem konstanten Grenzwert liegt:
- Öffnen des Bypass-Ventils, das die den Hochdruck-Abgasrückführungs-Kühler kurzschließende Bypass-Leitung öffnet.
- Regelung des Abgaskrümmer-Kühlers (11') mit einer gegenüber dem Nicht Regenerations betrieb erhöhten Regenerations-Höchsttemperatur.

Moderne Diesel-Verbrennungsmotoren weisen in aller Regel einen Ladeluft-Auflader auf. Ferner weisen moderne Diesel-Verbrennungsmotoren zur Verringerung der Abgas-Emissionen eine Hochdruck-Abgas-Rückführungsleitung von dem Verbrennungsmotor-Auslass und vor der Antriebsturbine des Ladeluft-Aufladers zu der Ladetuftseite hinter dem Verdichter des Ladeluft-Aufladers auf. Im Verlauf der Hochdruck-Abgasrückführungs-Leitung ist ein Abgasrückführungs-Kühler zur bedarfsweisen Kühlung des zurück geführten Abgases vorgesehen. Dem Abgasrückführungs-Kühler ist eine Bypass-Leitung mit einem Bypass-Ventil zugeordnet, um bei Bedarf das Abgas nicht durch den Kühler führen zu müssen, sondern an dem Kühler vorbei zu der Ladeluftseite leiten zu können. Dieser Kühler wird dazu eingesetzt, eine zu hohe Abgastemperatur am Verbrennungsmotor-Einlass und damit auch am Verbrennungsmotor-Auslass zu vermeiden, um insbesondere die nachfolgenden Aggregate vor zu hoher Abgas-Temperator zu schützen und den Stickoxid-Anteil im Abgas zu verringern.

Bei dem erfindungsgemäßen Verfahren wird der Abgasrückführungs-Kühler ohne weitere Bedingung durch Öffnen der Bypass-Leitung, außer Betrieb gesetzt.

Hierdurch steht für die Erwärmung des Abgases bereits vor dem Verbrennungsmotor-Einlass ein wärmeres Abgas zur Verfügung, als dies bei Kühlbetrieb des Abgasrückführungs-Kühlers der Fall wäre. Der Abgasrückführungs-Kühler wird während der Regeneration solange abgeschaltet, wie die Abgastemperatur unter einem festgelegten Grenzwert liegt. Dieser Grenzwert sollte unterhalb der Regenerations-Mindesttemperatur des Abgases liegen, ab deren Überschreitung die eigentliche Regeneration des Partikelfilters beginnt.

Moderne Kraftfahrzeug-Verbrennungsmotor-Anordnungen können zum Bauteilschutz über gekühlte Abgaskrümmer verfügen, die zur Kühlung des aus dem Verbrennungsmotor austretenden Abgases einen Kühler aufweisen. Der Abgaskrümmer-Kühler wird während der Regenerationsphase mit einer gegenüber dem Nicht-Regenerationsbetrieb erhöhten Abgastemperatur geregelt. Die Kühlleistung des Abgas-Kühlers wird also gegenüber dem Normalbetrieb, bei dem keine Regeneration des Partikelfilters stattfindet, verringert, um eine höhere Abgastemperatur für das schnelle Erreichen der Regenerations-Mindesttemperatur zu gewährleisten.

Die Erwärmung des Abgases zur Erreichung der Regenerations-Temperatur wird mit den beschriebenen Verfahrensschritten also erheblich beschleunigt. Hierdurch ergibt sich die Chance, auch bei nur kurzzeitigem Betrieb des Verbrennungsmotors unter Umständen eine Regeneration des Partikelfilters durchführen zu können.

Vorzugsweise liegt der Abgastemperatur-Grenzwert über 400 °C, und liegt bevorzugt zwischen 450 und 600 °C. Je nach Konstruktion des Abgas-Partikelfilters nach dem derzeitigen Stand der Technik kann die Regenerations-Mindesttemperatur bei 600 °C liegen, kann aber mit Hilfe von Additiven Katalysatoren und anderen technischen Maßnahmen auf bis zu ca. 500 °C verringert werden. Das über die Hochdruck-Abgasrückführung zurück geführte Abgas wird also solange an dem Abgasrückführungs-Kühler über die Bypass-Leitung vorbeigeführt, bis die Regenerations-Mindesttemperatur des Abgases annähernd oder vollständig erreicht ist.

Moderne Kraftfahrzeug-Verbrennungsmotor-Anordnungen weisen ferner einen geregelten Ladeluftkühler zwischen dem turbinenartigen Verdichter des Ladeluft-Aufladers und dem Ladeluft-Einlass des Verbrennungsmotors auf. Der Ladeluft-Kühler dient dazu, die von dem Verdichter verdichtete Ladeluft, die bei der Verdichtung entsprechend erwärmt wurde, zur Verbesserung des Wirkungsgrades wieder abzukühlen. Während der Regenerationsphase ist daher, solange die Abgastemperatur in der Regenerationsphase unter dem konstanten Grenzwert liegt, vorgesehen, den Ladeluft-Kühler mit einer gegenüber dem Nicht-Regenerationsbetrieb erhöhten Höchsttemperatur zu regeln. Der Ladeluftkühler ist In der Regel temperaturgeregelt, d. h., die Ladeluft-Temperatur ist die Führungsgröße der Regelung des Ladeluftkühlers. Während der Regenerationsphase, und solange die Abgastemperatur unter dem konstanten Grenzwert liegt, wird die Regelung des Ladeluftkühlers derart angepasst, dass die asu dem Ladeluftkühler austretende Ladeluft- eine erheblich erhöhte Temperatur aufweist. Auch durch diese Maßnahme wird erreicht, dass bei Auslösen einer Partikelfilter-Regeneration das in den Partikelfilter eintretende Abgas möglichst schnell eine Regenerations-Mindesttemperatur erreicht.

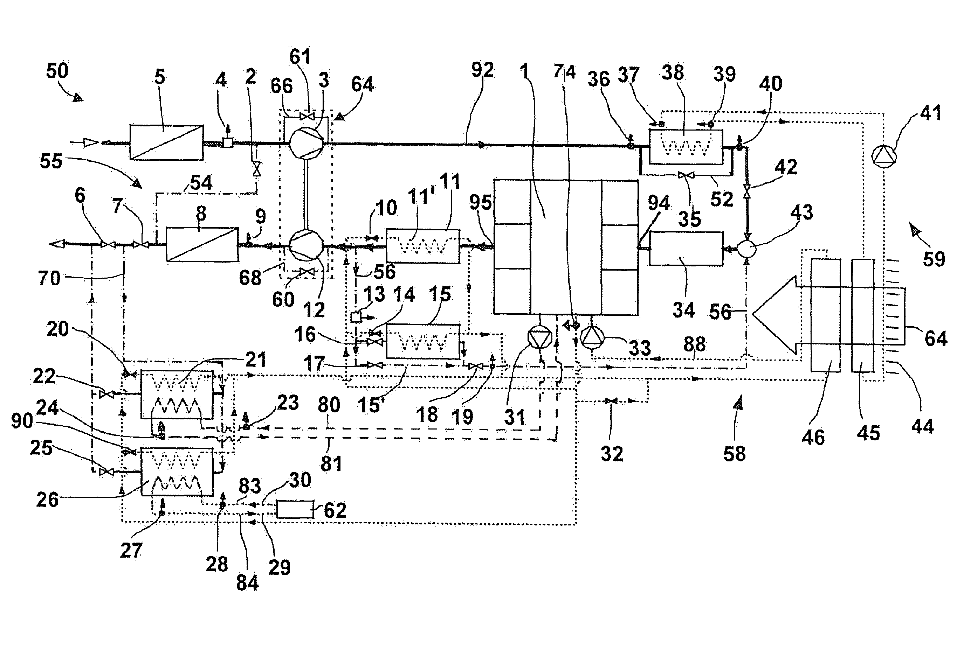

Im folgenden wird ein Ausführungsbeispiel der Erfindung anhand der Zeichnung näher erläutert:

Die Zeichnung zeigt eine schematische Darstellung einer Verbrennungsmotor-Anordnung.

In der Figur ist schematisch eine komplexe Verbrennungsmotor-Anordnung 50 dargestellt. In der Anordnung 50 sind alle wesentlichen Aggregate dargestellt, die um den Verbrennungsmotor 1 herum mit der Ladeluft, dem Abgas, mehreren Kühlmittelkreisläufen sowie zwei Ölkreisläufen zu tun haben.

Frische Ladeluft wird durch einen Luftfilter 5 angesaugt und passiert anschließend einen Luftmassenmesser 4. Die angesaugte Ladeluft tritt anschließend in einen Ladeluft- Auflader 64 ein, in dem sie in einem turbinenartigen Verdichter 3 ggf. verdichtet wird. Die Ladeluft strömt anschließend zu einem mit einem Kühlmittel gekühlten Ladeluftkühler 38, dem ein Bypass 52 mit einem Bypass-Ventil 35 zugeordnet ist. Von dort strömt die Ladeluft durch das Gas-Steuerventil 42 in Form einer Drosselklappe zu einem Mischer 43, in dem die Ladeluft ggf. gemischt wird mit zurückgeführtem Abgas aus der Hochdruck- Abgasrückführung .

Von dem Mischer 43 gelangt die Ladeluft über das Saugrohr 34 und durch einen Ladeluft-Einlass 94 in den Verbrennungsmotor 1. Dort wird die Ladeluft mit Kraftstoff angereichert, und wird das auf diese Weise gewonnene Gemisch gezündet. Das dabei entstehende Abgas strömt aus einem Abgas-Auslass 95 aus dem Verbrennungsmotor 1 aus.

Das aus dem Auslass 95 austretende Abgas wird in einem wassergekühlten Abgaskrümmer 11 gekühlt und strömt mit seinem Hauptstrom weiter zu einer Antriebsturbine 12 des Ladeluft-Aufladers 64. Die Antriebsturbine 12 treibt die Verdichterturbine 3 an. Der Antriebsturbine 12 ist ein Bypass 68 mit einem Bypass-Ventil 60 und der Verdichterturbine 3 ist ein Bypass 66 mit einem Bypass-Ventil 61 zugeordnet. Von dem Ladeluft- Auflader 64 kommend passiert das Abgas einen Abgastemperatur-Sensor 9, der kurz vor einem Abgaskatalysator 8 angeordnet ist. Aus dem Abgaskatalysator 8 strömt das Abgas durch ein erstes Gas-Steuerungsventil 7 und ein zweites Gas-Steuerungsventil 6 in einen nicht dargestellten Auspuff. Der hier dargestellte Strom des Gases ist der Hauptgastrom vom Einlass des Luftfilters bis zum Auslass in einen Schalldämpfer bzw. den Auspuff.

Dieser Gas-Hauptstrom weist drei Verzweigungen auf, nämlich eine Niederdruck-Abgasrückführung, eine Hochdruck-Abgasrückführung sowie ein Abzweig für die Versorgung von zwei Drei-Wege-Wärmetauschern 21, 26.

Die Niederdruck-Abgasrückführung wird von einer Leitung 54 gebildet, die im Abgaszweig zwischen dem Abgaskatalysator 8 und dem ersten Gas-Steuerventil 7 abzweigt und in ihrem Verlauf ein Abgasrückführungs-Steuerventil 2 aufweist. Diese Abgasrückführungs-Leitung 54 mündet in den Ladeluftstrang vor dem Ladeluft-Auflader 64.

Ferner ist eine Hochdruck-Abgasrückführung vorgesehen, wobei die Hochdruck-Abgasrückführungs-Leitung 56 auf der Abgasseite zwischen dem wassergekühlten Abgaskrümmer 11 und dem Ladeluft- Auflader 64 abzweigt. Nach dem Abzweig ist im Verlauf der Leitung 56 ein Abgasmassen- und Temperatursensor 13 angeordnet, der die Abgasmasse und die Abgastemperatur an dieser Stelle detektiert. Der Abgasstrom strömt anschließend durch einen Hochdruck-Abgasrückführungs-Kühler 15, dem ein Gas-Steuerventil 16 vorgeschaltet ist. Ferner ist parallel zu dem Kühler 15 ein Bypass 15' vorgesehen, durch den das Abgas unter Umgehung des Kühlers 15 strömen kann, wenn die betreffenden Gas-Steuerventile 16, 17, 18 entsprechend geschlossen bzw. geöffnet sind. In dem Hochdruck-Abgasrückführungs-Kühler 15 kann das durch die Leitung 56 zurückgeführte Abgas bei Bedarf gekühlt werden, um die thermische Belastung des Verbrennungsmotors 1 und der im Abgas-Hauptstrom liegenden Aggregate zu reduzieren, und Stickoxide in dem Abgas zu verringern.

In Strömungsrichtung hinter dem Kühler 15 ist im Verlauf der Leitung 56 ein Hochdruck-Abgasrückführungs-Kühler-Sensor 19 angeordnet, mit dessen Hilfe die Kühlleistung des Abgasrückführungs-Kühlers 15 geregelt werden kann. Das Abgas strömt von dort aus in den Mischer 43, in dem die Ladeluft mit dem Abgas aus der Hochdruck-Abgasrückführungsleitung 56 gemischt wird.

Eine weitere Abgas-Leitung 70 zweigt im Abgas-Hauptstrom zwischen dem ersten Gas-Steuerventil 7 und dem zweiten Gas-Steuerventil 6 zu den zwei Drei-Wege-Wärmetauschern 21, 26 ab. In dem ersten Drei-Wege-Wärmetauscher 21 kann mit Hilfe des warmen Abgases ein Zielmedium erwärmt und mit Hilfe des ebenfalls eingespeisten Kühlmittels dasselbe Zielmedium bei Bedarf gekühlt werden. Beide Drei-Wege-Wärmetauscher weisen daher neben ihren Abgas-Einlässen auch Einlässe für das Kühlmittel auf. Der erste Drei-Wege-Wärmetauscher ist über eine Schmiermittel-Zuleitung 80 und -Ableitung 81 verbunden mit entsprechenden Schmiermittel-Anschlüssen des Verbrennungsmotors 1. In dem ersten Drei-Wege-Wärmetauscher 21 wird also das Verbrennungsmotor-Schmiermittel bei Bedarf durch das Kühlwasser gekühlt bzw. durch das Abgas erwärmt.

Der zweite Drei-Wege-Wärmetauscher 26 ist über eine Schmiermittel-Zuleitung 83 und eine Schmiermittel-Ableitung 84 mit einem Getriebe 62 verbunden. Durch die Schmiermittel- Zuleitung und -Ableitung 83, 84 und den zugeordneten Drei-Wege-Wärmetauscher 26 kann das Getriebe-Schmiermittel bei Bedarf gekühlt oder erwärmt werden. Dies ist insbesondere bei Automatik- Getrieben sinnvoll, in denen die Schmiermittelmenge häufig 10 Liter und mehr betragen kann, und von denen bei geringer Schmiermittel- Temperatur ein hoher Teil der Antriebsleistung absorbiert wird, und bei zu hoher Temperatur zuviel Schlupf auftritt.

Vorliegend sind zwei Kühlmittelkreisläufe vorgesehen, nämlich ein erster Hochtemperatur-Kühlmittelkreislauf 58 und ein zweiter Niedertemperatur-Kreislauf 59. Der Niedertemperatur-Kreislauf 59 dient der Kühlung des Ladeluftkühlers 38 und weist hierzu einen Niedertemperatur-Kühler 45 und eine Niedertemperatur-Kühlmittelpumpe 41 auf.

Der Hochtemperatur-Kühlmittelkreislauf 58 weist einen Kühler 46, eine Kühlmittel-Pumpe 33 sowie eine Vielzahl von Leitungen und Ventilen auf. Der Kühlmittel-Hauptstrom läuft vom Kühler 46 aus kommend durch eine Kühlmittel-Leitung 88 zu der Kühlmittel-Pumpe 33, die bei Betrieb das Kühlmittel in den Verbrennungsmotor 1 pumpt. Das aus dem Verbrennungsmotor 1 ausströmende Kühlmittel strömt über ein Kühlmittel-Steuerventil 32 zurück zu dem Kühler 46.

Zwischen dem Kühlmittel- Auslass des Verbrennungsmotors 1 und dem Kühlmittel-Steuerventil 32 zweigen mehrere Kühlmittel-Leitungen zu dem Abgaskrümmer-Kühler 11, dem Hochdruck-Abgasrückführungs-Kühler 15, zu dem ersten Drei-Wege-Wärmetauscher 21 und zu dem zweiten Drei-Wege-Wärmetauscher 26 ab, um von dort aus jeweils in den Kühlmittel-Kühler 46 zurückzuströmen.

Die Kühlmittelströme werden mit Hilfe von Steuerventilen 10, 14, 20, 90 dem Bedarf entsprechend gesteuert bzw. geregelt.

Im Verlauf der Schmiermittel-Leitungen 80, 81, 83, 84 sind jeweils vor und hinter dem Drei-Wege-Wärmetauschern 21, 26 Temperatursensoren 22, 24, 27, 28 angeordnet, mit deren Hilfe die betreffende Schmiermittel-Temperatur geregelt werden kann.

Die beiden Kühler 45, 46 der beiden Kühlmittel-Kreisläufe werden durch von außen einströmende Kühlluft 64 gekühlt, die dabei durch eine verschließbare Kühlluft-Jalousie 44 hindurch tritt.

### Die Regenerationsphase des Verbrennungsmotors läuft wie folgt ab:

Die Regeneration des Abgas-Partikelfilters 8 wird durch eine Regenerations-Auslösevorrichtung ausgelöst, die Bestandteil der zentralen Motorsteuerung sein kann. Die Regenerations-Auslösevorrichtung löst eine Regeneration beispielsweise nach festen Betriebszeit-Intervallen aus. Die Regenerations-Auslösevorrichtung kann die Regeneration des Partikelfilters 8 jedoch auch bedarfsweise auslösen, indem sie beispielsweise mit Hilfe entsprechender Drucksensoren den Differenzdruck über dem Partikelfilter 8 erfasst. Überschreitet dieser Differenzdruck einen Grenzwert, wird eine Regeneration ausgelöst.

Bei einem Diesel-Verbrennungsmotor kann es passieren, dass bei Betrieb des Dieselmotors mit geringer Last selbst bei Betriebstemperatur des Verbrennungsmotors und aller angeschlossenen Aggregate und verwendeten Fluide die Abgastemperatur vor dem Partikelfilter 8 nicht wesentlich über 200 °C liegt. Um dennoch eine Regeneration des Partikelfilters 8 zu ermöglichen, greift die Motorsteuerung in einige Abgas kühlende Aggregate der Anordnung ein, solange die vor dem Partikelfilter durch einen Temperatursensor gemessene Abgastemperatur unter einem Grenzwert von beispielsweise 500 °C liegt.

Zum einen wird der Hochdruck-Abgasrückführungs-Kühler 15 durch Öffnen des Bypass- Ventils 17 kurzgeschlossen, so dass das Abgas über die Bypass-Leitung 15' ungekühlt der Ladeluft zugeführt wird. Ferner wird die Kühlleistung des Abgaskrümmer- Kühlers 11' soweit verringert, wie dies möglich ist, ohne nachfolgende Bauteile, insbesondere die Antriebsturbine 12 des Ladeluft-Aufladers 64 nicht zu gefährden. Im Extremfall kann der Abgaskrümmer- Kühler 11' abgeschaltet werden.

Ferner wird der Ladeluft-Kühler 38 während der Regenerationsphase und solange die Abgastemperatur unterhalb des festgelegten Grenzwertes liegt mit einer gegenüber dem Nicht-Regenerationsbetrieb erhöhten Höchsttemperatur als Stellgröße geregelt bzw. im Extremfall in dieser Phase vollständig abgeschaltet.

Mit den drei beschriebenen Maßnahmen wird dem Abgas beim Durchtritt durch die verschiedenen Kühler so wenig Wärme wie möglich und soviel Wärme wie nötig entzogen, um einerseits eine Beschädigung von Aggregaten zu vermeiden und andererseits das Abgas vor Eintritt in den Partikelfilter 8 möglichst schnell auf die Regenerations-Mindesttemperatur zu erwärmen.

Auf diese Weise wird es möglich, auch bei Betrieb des Verbrennungsmotors unter relativ geringer Last eine Regeneration des Partikelfilters durchzuführen.

## Patentansprüche

1. Verfahren zur Steuerung einer Kraflfahrzeug-Verbrennungsmotor-Anordnung (50) mit
einem Verbrennungsmotor (1) mit einem Ladeluft-Einlass (94) und einem Abgas-Auslass (95),
einem Ladeluft-Auflader (64) mit einer Antriebsturbine (12) und einem Verdichter (3),
einer Hochdruck-Abgasrückführungs-Leitung (56) von dem Auslass (95) und vor der Antriebsturbine (12) zur der Ladeluftseite hinter dem Verdichter (3), wobei im Verlauf der Abgasrückführungs-Leitung (56) ein Hochdruck-Abgasrückführungs-Kühler (15) mit einer Bypass-Leitung (15') mit einem Bypass-Ventil (17) angeordnet ist,
einem Abgaskrümmer (11), der einen Kühler (11') aufweist,
einem mit dem Auslass (95) verbundenen Abgas-Partikelfilter (8),
einem Abgastemperatur-Sensor (9) vor dem Partikelfilter (8), und
einer Regenerations-Auslösevorrichtung, die nach festgelegten Kriterien eine Regeneration des Partikelfilters (8) auslöst,
mit den folgenden Verfahrensschritten, wenn eine Regeneration ausgelöst ist:
Bestimmung der Abgastemperatur mit dem Abgastemperatur-Sensor (9),
wenn die Abgastemperatur in der Regenerationsphase unter einem konstanten Grenzwert liegt:
Öffnen des Bypass-Ventiis (17), und
Regelung des Abgaskrümmer-Kühlers (11') mit einer gegenüber dem Nicht-Regenerationsbetrieb erhöhten Regenerations-Höchsttemperatur.

2. Verfahren zur Steuerung einer Kraftfahrzeug-Verbrennungsmotor-Anordnung (50) nach Anspruch 1, **dadurch gekennzeichnet, dass** der Abgastemperatur-Grenzwert über 400 °C, und bevorzugt zwischen 450 und 600 °C liegt.

3. Verfahren zur Steuerung einer Kraftfahrzeug-Verbrennungsmotor-Anordnung (50) nach einem der Ansprüche 1 oder 2, wobei die Anordnung (50) einen geregelten Ladeluftkühler (38) zwischen dem Verdichter (3) und dem Einlass (94) aufweist, wobei während der Regenerationsphase der Ladeluftkühler (38) mit einer gegenüber dem Nicht-Regenerationsbetrieb erhöhten Höchsttemperatur geregelt wird.

## Claims

1. A method for controlling a motor vehicle internal combustion engine assembly (50) comprising
an internal combustion engine (1) with a charge air inlet (94) and an exhaust outlet (95),
a charge air charger (64) comprising a driving turbine (12) and a compressor (3),
a high-pressure exhaust gas recirculation line (56) from the outlet (95) and before the driving turbine (12) to the charge air side behind the compressor (3), wherein a high-pressure exhaust gas recirculation cooler (15) with a bypass line (15') including a bypass valve (17) is arranged in the run of the line,
an exhaust manifold (11) comprising a cooler (11'),
an exhaust gas particulate filter (8) connected with the outlet (95),
an exhaust gas temperature sensor (9) upstream of the particulate filter (8), and
a regeneration initiation device initiating the regeneration of the particulate filter (8) according to predefined criteria,
comprising the following method steps when a regeneration has been initiated:
determining the exhaust gas temperature by means of the exhaust gas temperature sensor (9),
if the exhaust gas temperature In the regeneration phase is below a constant limit value:
opening the bypass valve (17), and
regulating the exhaust manifold cooler (11') with a maximum regeneration temperature higher than in the non-regeneration mode.

2. The method for controlling a motor vehicle internal combustion engine assembly (50) according to claim 1, **characterized in that** the exhaust gas temperature sensor limit value is higher than 400°C and preferably between 450 and 600°C.

3. The method for controlling a motor vehicle internal combustion engine assembly (50) according to claim 1 or 2, wherein the assembly (50) has a regulated charge air cooler (38) between the compressor (3) and the inlet (94), the charge air cooler (38) being regulated in the regeneration phase with a maximum temperature higher than in the non-regeneration mode.

## Revendications

1. Procédé de commande d'un agencement (50) de moteur à combustion interne de véhicule automobile comprenant
un moteur à combustion interne (1) avec une entrée de l'air de suralimentation (94) et une sorte de gaz d'échappement (95),
un chargeur de l'air de suralimentation (64) avec une turbine d'entrainement (12) et un compresseur (3),
un conduit haute pression de récirculation de gaz d'échappement (56) s'étendant à partir de ladite entrée (95) et devant ladite turbine d'entrainement (12) vers le côté d'air de suralimentation jusqu'à derrière ledit compresseur (3), un refroidisseur de récirculation de gaz d'échappement (15), fonctionnant sous haute pression, étant arrangé dans le parcours dudit conduit, ledit refroidisseur comprenant un conduit de dérivation (15') comportant une vanne bypass (17),
un collecteur d'échappement (11) comprenant un refroidisseur (11'),
un filtre à particules de gaz d'échappement (8) relié à ladite sortie (95), un capteur de température de gaz d'échappement (9) à l'amont du filtre à particules (8), et
un dispositif d'initiation de régénération qui initie une régénération dudit filtre à particules (8) suivant des critères définis,
comprenant les étapes suivantes, si une régénération à été initiée:
déterminer la température du gaz d'échappement à l'aide dudit capteur de température de gaz d'échappement (9),
si, dans la phase de régénération, la température de gaz d'échappement est inférieure à une valeur limite constante:
ouvrir la vanne bypass (17), et
régler le refroidisseur (11') du collecteur d'échappement avec une température maximale de régénération élevée par rapport au mode de non-régénération.

2. Procédé de commande d'un agencement (50) de moteur à combustion interne de véhicule automobile selon la revendication 1, **caractérisé en ce que** la valeur limite de la température du gaz d'échappement est supérieure à 4ßß°C et se situe de préférence entre 450 et 600°C.

3. Procédé de commande d'un agencement (50) de moteur à combustion interne de véhicule automobile selon l'une des revendications 1 ou 2, dans lequel l'agencement (50) comprend un refroidisseur de l'air de suralimentation (38) réglé entre ledit compresseur (3) et ladite entrée (94), ledit un refroidisseur de l'air de suralimentation (38) étant réglé, dans la phase de régénération, avec une température élevée par rapport au mode de non-régénération.
